(19) Europäisches Patentamt
European Patent Office
Office européen des brevets

(11) **EP 2 720 929 B1**

(12) **EUROPÄISCHE PATENTSCHRIFT**

(45) Veröffentlichungstag und Bekanntmachung des Hinweises auf die Patenterteilung:
**27.04.2016 Patentblatt 2016/17**

(21) Anmeldenummer: **12735104.7**

(22) Anmeldetag: **15.06.2012**

(51) Int Cl.:
*B62D 15/02* (2006.01)     *B60Q 1/52* (2006.01)
*G06T 5/00* (2006.01)     *G06K 9/00* (2006.01)
*B60K 35/00* (2006.01)     *B60Q 9/00* (2006.01)
*B60W 30/12* (2006.01)     *B60W 30/16* (2012.01)
*B60W 50/08* (2012.01)     *G01C 21/36* (2006.01)

(86) Internationale Anmeldenummer:
**PCT/EP2012/061500**

(87) Internationale Veröffentlichungsnummer:
**WO 2012/172077 (20.12.2012 Gazette 2012/51)**

(54) **VERFAHREN UND VORRICHTUNG ZUR UNTERSTÜTZUNG EINES FAHRERS BEI EINER SPURFÜHRUNG EINES FAHRZEUGS AUF EINER FAHRBAHN**

METHOD AND DEVICE FOR ASSISTING A DRIVER IN PERFORMING LATERAL GUIDANCE OF A VEHICLE ON A CARRIAGEWAY

PROCÉDÉ ET DISPOSITIF POUR ASSISTER UN CONDUCTEUR LORS D'UN GUIDAGE D'UN VÉHICULE SUR UNE BANDE DE CIRCULATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2011 DE 102011077752**

(43) Veröffentlichungstag der Anmeldung:
**23.04.2014 Patentblatt 2014/17**

(73) Patentinhaber: **Robert Bosch GmbH**
**70442 Stuttgart (DE)**

(72) Erfinder:
• **NIEHSEN, Wolfgang**
**31162 Bad Salzdetfurth (DE)**
• **SIMON, Stephan**
**31079 Sibbesse (DE)**

(56) Entgegenhaltungen:
**EP-A2- 1 398 684     DE-A1-102008 002 560**
**DE-A1-102008 011 228     GB-A- 2 265 779**
**JP-A- 2001 034 897     JP-A- 2002 046 501**

EP 2 720 929 B1

**Beschreibung**

Stand der Technik

Die vorliegende Erfindung bezieht sich auf ein Verfahren zur Unterstützung eines Fahrers bei einer Spurführung eines Fahrzeugs auf einer Fahrbahn, auf eine entsprechende Vorrichtung sowie auf ein entsprechendes Computerprogrammprodukt gemäß den Hauptansprüchen.

ACC-Systeme (ACC = Adaptive Cruise Control = adaptive Fahrtsteuerung) regeln den Abstand zu vorausfahrenden Fahrzeugen und befinden sich seit fast 10 Jahren im Markt. Sie basieren meist auf einem Radar-Sensor, in einigen neueren Fahrzeugen auch auf einem Lidar-Sensor. Neuerdings werden auch mehrere Sensoren fusioniert, beispielsweise Radar und Video, um die ACC-Funktion zu verbessern und zu erweitern, beispielsweise in Bezug auf die Berücksichtigung von Spurinformationen, einer Verbesserung der Objektvermessung insbesondere in laterale Richtung, eine frühere Reaktion auf Ein- Ausscherer, eine Freiflächendetektion und Anfahrabsicherung oder eine seitliche Erweiterung des Erfassungsbereichs.

Die DE 10 2008 003 666 A1 betrifft ein Verfahren für die Steuerung eines Fahrerassistenzsystems mit Sensoren für die Erfassung des Fahrzeugumfelds und einer Einrichtung für den Eingriff in Bordsysteme des Fahrzeugs in Abhängigkeit von Ausgangssignalen der Sensoren, wobei das Fahrerassistenzsystem mindestens den Verlauf eines von dem Fahrzeug befahrenen Fahrstreifens und die Position des Fahrzeugs in Bezug auf den Fahrstreifen erfasst und das Fahrzeug auf einer Trajektorie führt. Hierbei legt das Fahrerassistenzsystem die Trajektorie in Abhängigkeit von dem Fahrerwunsch fest.

Allen bisher bekannten Fahrerassistenzsystemen ist gemeinsam, dass sie den Fahrer nur wenig über die Objekterfassung durch die Sensoren informieren.

Die JP 2002 046501 A ist als nächstliegender Stand der Technik nach dem Oberbegriff des Anspruchs 1 zu sehen und offenbart ein eine Fahrzeugfolgekontrollgerät für ein Fahrzeug.

Offenbarung der Erfindung

Vor diesem Hintergrund wird mit der vorliegenden Erfindung ein Verfahren, weiterhin ein Steuergerät, das dieses Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zur Unterstützung eines Fahrers bei einer Spurführung eines Fahrzeugs auf einer Fahrbahn, wobei das Verfahren die folgenden Schritte aufweist:

- Anzeigen eines eingelesenen Bildes auf einer Anzeigeeinheit an den Fahrer, wobei das Bild von einer Kamera aufgenommen wurden und eine Fahrzeugumgebung repräsentieren;

- Einlesen eines von dem Fahrer an einer Bedienungsschnittstelle eingegebenen Bedienungssignals;

- Auswählen eines in dem Bild enthaltenen Objektes unter Verwendung des Bedienungssignals;

- Anzeigen einer Markierung auf der Anzeigeeinheit, wobei die Markierung in einem Bereich des Bilds angezeigt wird, der das Objekt repräsentiert; und

- Verwenden des Objektes zur Bestimmung von zumindest einem Längsregelungsparameter für einen von dem Fahrzeug zu befahrenden Fahrweg, um den Fahrer bei der Spurführung des Fahrzeugs auf der Fahrbahn zu unterstützen, insbesondere wobei der zumindest eine Längsregelungsparameter einen einzuhaltenden Abstand des Fahrzeugs zum Objekt und/oder eine relative Geschwindigkeit bei der Annäherung des Fahrzeugs an das Objekt umfasst.

Die vorliegende Erfindung schafft ferner eine Vorrichtung, insbesondere ein Navigationsgerät, die ausgebildet ist, um die Schritte des erfindungsgemäßen Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem, einem Computer entsprechenden Gerät ausgeführt wird.

Unter einer Unterstützung eines Fahrers bei der Spurführung eines Fahrzeugs auf einer Fahrbahn ist beispielsweise eine automatische Längsregelung und/oder eine Querführung bezüglich des Objektes zu verstehen oder auch eine Unterstützung in Form von akustischer und/oder haptischer und/oder virtueller Signale an den Fahrer zu verstehen, die zum Bremsen und Beschleunigen oder Lenken auffordern. Mit einer Anzeigeeinheit kann ein Bildschirm oder auch eine Einrichtung verstanden werden, die Objekte auf die Windschutzscheibe projiziert. Unter einer Fahrzeugumgebung kann ein Außenbereich um das Fahrzeug verstanden werden, insbesondere eine Fahrbahn vor dem Fahrzeug, die von der Kamera aufgenommen wird. Unter einer Bedienungsschnittstelle kann eine Schnittstelle verstanden werden, die eine manuelle, sprachliche oder andere Eingabe eines Fahrers oder einer Person in dem Fahrzeug erkennt, welche hierauf ansprechend das Bedienungssignal bereitstellt. Unter einer Markierung kann ein Markierungsobjekt verstanden werden, welches auf der Anzeigeeinheit angezeigt wird. Dabei kann die Markierung beziehungsweise das Markierungsobjekt einem Bereich des Bildes überlagert werden, in dem auch das Objekt dargestellt wird, welches ausgewählt wurde. Unter einer Bestimmung eines von dem Fahrzeug zu befahrenden Fahrerweges kann eine Ermittlung denjenigen Trajektorie verstanden werden, die das Fahrzeug günstigerweise geführt werden soll, um beispielsweise dem Objekt auf dem kürzesten Weg oder dem komfortabelsten Weise zu folgen. Unter einem Längsregelungsparameter kann beispielsweise ein Abstand zu einem Objekt, dem das Fahrzeug folgen soll oder eine Geschwindigkeit verstanden werden, wobei diese Geschwindigkeit eine maximale Geschwindigkeit darstellt, die das Fahrzeug einhalten soll, damit eine Kollision mit dem Objekt vermieden werden kann. Dieser Längsregelungsparameter kann dann in einer Fahrzeugführungsassistenzeinheit verwendet werden, um ein Längsführungssignal zu generieren und dem Fahrer auszugeben, um ihn durch dieses Längsführungssignal bei der Steuerung des Fahrzeugs zu unterstützen. Unter einem Längsführungssignal kann dabei ein Signal verstanden werden, das eine Anzeige für den Fahrer bietet, wie groß die Entfernung oder wie groß die Geschwindigkeit in Bezug auf einen möglichen Zusammenprall des Fahrzeugs mit dem Objekt ist. Beispielsweise kann das Längsführungssignal in der Form eines Tachometers dargestellt werden, bei dem die Gefahr eines in Kürze zu befürchtenden Zusammenpralls des Fahrzeugs mit dem Objekt bildlich dargestellt ist. Alternativ oder zusätzlich kann natürlich das Längsführungssignal auch verwendet werden, um automatisch einen Lenkungseingriff vorzunehmen und/oder eine Bremse zu aktivieren, um dem Fahrer des Fahrzeugs zu assistieren.

Die vorliegende Erfindung basiert auf der Erkenntnis, dass nun durch des Anzeigen der Markierung auf der Anzeigeeinheit und dem Verwenden sowie der Bestimmung eines von dem Fahrzeug zu fahrenden Fahrwegs der Fahrer des Fahrzeugs auf optische sehr ansprechende und einfach zu erkennen Weise eine Information erhält, welches Objekt das Navigationsgerät bei der Bestimmung der Spurführung zu Grunde legt.

Hierdurch kann der Fahrer schnell einen Fehler erkennen, wenn beispielsweise ein nicht gewünschtes Objekt zur Bestimmung von zumindest einem Längsregelungsparameter für einen vom Fahrzeug zu befahrenden Fahrweg verwendet wird. Beispielsweise kann sich ein solcher Längsregelungsparameter auch auf eine Geschwindigkeit beziehen, mit der sich die Objekte bewegen. Wenn beispielsweise rechts auf einer Fahrbahn und ein langsames und links auf der (Nachbar-) Fahrbahn ein schnelles Fahrzeug fahren, kann wegen der Geschwindigkeit das linke Fahrzeug ausgewählt werden und dem System damit mitgeteilt werden, dass der Fahrer nicht verlangsamen und dem rechten Fahrzeug folgen, sondern schnell fahren will. Auf diese Weise können Irritationen des Fahrers vermieden werden, die möglicherweise gefährliche Situationen im Straßenverkehr durch eine Ablenkung des Fahrers verursachen.

Günstig ist es, wenn gemäß einer besonderen Ausführungsform der vorliegenden Erfindung im Schritt des Anzeigens des Bildes eine Voraberkennung von Objekten aus dem Bild erfolgt, wobei im Schritt des Auswählens unter Verwendung des Bedienungssignals eines von mehreren voraberkannten Objekten ausgewählt wird. Unter einer Voraberkennung kann eine Vorauswertung verstanden werden, bei der das Bild bereits vor dem Auswählen eines Objektes untersucht wird und mehrere mögliche auszuwählende Objekte bereits erkannt oder als solche klassifiziert werden. Eine derartige Ausführungsform der vorliegenden Erfindung bietet den Vorteil, dass nun das Auswählen und nachfolgend das Markieren des ausgewählten Objekts schneller erfolgen kann, wodurch der Fahrer eine kürzere Zeitspanne seinen Blick auf die Anzeigeeinheit richten braucht, um zu erkennen, ob das richtige Objekt für die Bestimmung des Fahrwegs ausgewählt wurde.

Gemäß einer weiteren Ausführungsform der vorliegenden Erfindung kann im Schritt des Anzeigens das Bild auf einem berührungsempfindlichen Display der Anzeigeeinheit angezeigt werden und wobei im Schritt des Einlesens ein erkannter Druck auf das berührungsempfindliche Display als Bedienungssignal eingelesen wird. Eine derartige Ausführungsform der vorliegenden Erfindung bietet den Vorteil einer schnellen, präzisen und zuverlässigen Möglichkeit zur Auswahl eines Objektes durch den Fahrer, welches zur Bestimmung des zu befahrenden Fahrwegs verwendet werden soll.

Alternativ kann auch im Schritt des Einlesens das Bedienungssignal ansprechend auf eine erkannte Geste des Fahrers, insbesondere ein Zeigen des Fahrers mit dem Finger auf eine Position generiert werden. Eine derartige Ausführungsform der vorliegenden Erfindung bietet eine weitere Komfortsteigerung für den Fahrer, da er bei der Eingabe nicht mehr darauf achten braucht, ob er auch ein berührungsempfindliches Display an der korrekten Stelle berührt. Insofern kann auch die Sicherheit des Fahrers erhöht werden, da der Fahrer seine Aufmerksamkeit nicht mehr so lange von dem Verkehrsgeschehen abwenden braucht, um die entsprechende Eingabe zu tätigen.

Um auch eine präzise Auswahl des gewünschten Objektes bei der Fahrt im Fahrzeug zu ermöglichen, kann im Schritt des Auswählens dasjenige in dem Bild voraberkannte Objekt ausgewählt werden, das am Nähesten zu einer Position in dem Bild liegt, die durch einen erkannten Druck auf das berührungsempfindliche Display repräsentiert ist. Eine solche Funktion bietet beispielsweise auch bei unpräzisen Eingaben auf dem berührungsempfindlichen Display die Möglichkeit dennoch das gewünschte Objekt zuverlässig auswählen zu können. Insbesondere ist eine solche Möglichkeit beispielsweise bei einer Fahrt auf unebener Fahrbahn oder bei einem lediglich kurzen Blick auf die Anzeigeeinheit bei einer schnellen Fahrt auf der Autobahn von besonderem Vorteil.

Besonders vorteilhaft ist es, wenn gemäß einer weiteren Ausführungsform der vorliegenden Erfindung im Schritt des Einlesens eine Bedienungsschnittstelle verwendet wird, die das Bedienungssignal durch eine Auswertung eines Sprachbefehls des Fahrers des Fahrzeugs erzeugt. Eine derartige Ausführungsform der vorliegenden Erfindung bietet den Vorteil einer Eingabe durch den Fahrer, ohne dass dieser beispielsweise die Hand von Fahrzeugsteuerungseinheiten wie dem Lenkrad oder einem Gangschalthebel entfernen braucht. Dies erhöht die Verkehrssicherheit beim Einsatz des hier vorgeschlagenen Ansatzes.

Gemäß einer anderen Ausführungsform der vorliegenden Erfindung kann im Schritt des Auswählens des Objektes ein Objekt ausgewählt werden, das ein anderes Fahrzeug repräsentiert, das sich auf der Fahrbahn vor oder neben dem Fahrzeug befindet. Eine derartige Ausführungsform der vorliegenden Erfindung bietet den Vorteil einer einfachen Auswahl eines Fahrzeugs, dem mit einem Spurführungsassistenten gefolgt werden soll. Weiterhin ist ein anderes Fahrzeug meist auch ausreichend groß, um einerseits über einen Tastendruck schnell ausgewählt werden zu können oder andererseits auf der Anzeigeeinheit schnell erkannt zu werden, so dass der Fahrer nur eine sehr kleine Zeitspanne seinen Blick vom Verkehrsgeschehen auf die Anzeigeeinheit zu richten braucht.

Weiterhin kann gemäß einer anderen Ausführungsform der vorliegenden Erfindung im Schritt des Anzeigens die Markierung mit zeitlich variierender Darstellung angezeigt werden. Eine derartige Ausführungsform der vorliegenden Erfindung bietet den Vorteil, dass das ausgewählte Objekt sehr schnell, auch bei einem nur flüchtigen Blick auf die Anzeigeeinheit erkannt werden kann. Ferner können durch die Variation der Darstellung zusätzliche Informationen wie beispielsweise ein Hinweis auf eine drohende Kollision mit dem zu verfolgenden Objekt angezeigt werden. Hierdurch wird ebenfalls wieder die Verkehrssicherheit erhöht, da die Aufmerksamkeit des Fahrers nur für eine geringe Zeitspanne vom Verkehrsgeschehen abgewendet werden braucht.

Um beispielsweise eine in Kürze zu erwartende gefährliche Situation im Zusammenhang mit dem Objekt dem Fahrer möglichst frühzeitig und schnell übermitteln zu können, kann im Schritt des Anzeigens ferner eine Information bezüglich eines Abstands zu dem Objekt auf der Anzeigeeinheit angezeigt werden, wobei die Information in einem Bereich des Bildes angezeigt wird, der das Objekt repräsentiert. Unter einer solchen Information kann beispielsweise ein Hinweis auf einen kurz bevorstehenden Zusammenstoß mit dem Objekt angezeigt werden. In diesem Fall kann beispielsweise die Information als Symbol oder spezielle Grafik zusammen mit der Markierung in demjenigen Bereich des Bildes angezeigt werden, der das Objekt repräsentiert.

Gemäß einer weiteren Ausführungsform der vorliegenden Erfindung kann auch im Schritt des Verwendens ferner ein Vergleich des Fahrweges des Objektes mit einer gewünschten vordefinierten Fahrstrecke des Fahrzeugs erfolgen, wobei das Objekt nicht mehr zur Bestimmung des von dem Fahrzeug zu befahrenden Fahrweges verwendet wird, wenn der Vergleich ergeben hat, dass das Objekt sich mehr als eine vorbestimmte Distanz von der gewünschten vordefinierten Fahrstrecke weg entfernt hat und/oder

dass im Schritt des Verwendens das Objekt nicht mehr zur Bestimmung des von dem Fahrzeug zu befahrenden Fahrweges verwendet wird, wenn eine bestimmte Geschwindigkeit des Objektes größer als eine an der Position des Fahrzeugs zulässige Geschwindigkeit ist und/oder

dass im Schritt des Verwendens das Objekt nicht mehr zur Bestimmung von zumindest einem Längsregelungsparameter für einen von dem Fahrzeug zu befahrenden Fahrweges verwendet wird, wenn ein ermittelter Abstand des Objektes zu dem Fahrzeug größer als ein vorbestimmter Abstand ist. Eine derartige Ausführungsform der vorliegenden Erfindung bietet den Vorteil, dass frühzeitig erkannt werden kann, dass sich das Objekt, welches als Basis für die Bestimmung des zu befahrenden Fahrwegs verwendet wird, insbesondere welche ihm gefolgt wird, nicht mehr als solches die Spurführung des eigenen Fahrzeugs unterstützendes Objekt eignet. In diesem Fall kann die Ausgabe einer Fehlermeldung vermieden werden, die möglicherweise den Fahrer irritieren würde und somit zu einer gefährlichen Verkehrssituation führen könnte.

Die Erfindung wird nachstehend anhand der beigefügten Zeichnungen beispielhaft näher erläutert. Es zeigen:

Fig. 1      ein Blockschaltbild eines Fahrzeugs, in dem eine Vorrichtung gemäß einem Ausführungsbeispiel der vorliegenden Erfindung verwendet wird;

Fig. 2      ein detailliertes Blockschaltbild einer Vorrichtung zur Unterstützung des Fahrers bei der Spurführung eines Fahrzeugs auf einer Fahrbahn aus Fig. 1;

Fig. 3　　　　eine Darstellung eines von der Kamera des Fahrzeugs aufgenommenen Bildes;

Fig. 4　　　　eine weitere Darstellung eines von der Kamera des Fahrzeugs aufgenommenen Bildes, wobei eine Markierung in demjenigen Bereich eingeblendet ist, an dem sich das ausgewählte Objekt im Kamerabild befindet;

Fig. 5　　　　eine Darstellung eines Objektes mit einer Markierung oder einer Zusatzinformation in einem Kamerabild;

Fig. 6　　　　eine weitere Darstellung eines Objektes mit Markierung oder einer Zusatzinformation in einem Kamerabild;

Fig. 7A-7B　　Darstellungen des Objektes mit einer Zusatzinformation in dem Kamerabild zu unterschiedlichen Zeitpunkten;

Fig. 8　　　　eine Darstellung einer Visualisierung der Zeit bis zu einer Kollision mit einem Objekt in einem Balkendiagramm;

Fig. 9　　　　eine Darstellung einer Visualisierung der Zeit bis zu einer Kollision mit einem Objekt in der Form eines Rundinstrumentes;

Fig. 10　　　eine Darstellung der Einblendung von Zeiten bis zu einer Kollision mit verschiedenen Objekten in der Form von Rundinstrumenten, die im Bereich der jeweiligen Objekte im Kamerabild eingeblendet sind;

Fig. 11　　　eine Darstellung der Einblendung von Geschwindigkeiten des eigenen Fahrzeugs und eines weiteren Fahrzeugs in einem gemeinsamen Rundinstrument;

Fig. 12　　　eine Darstellung eines Kamerabildes, das eine Extraktion eines verfolgten Objektes aus dem Bild ermöglicht; und

Fig. 13　　　ein Ablaufdiagramm eines Verfahrens gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

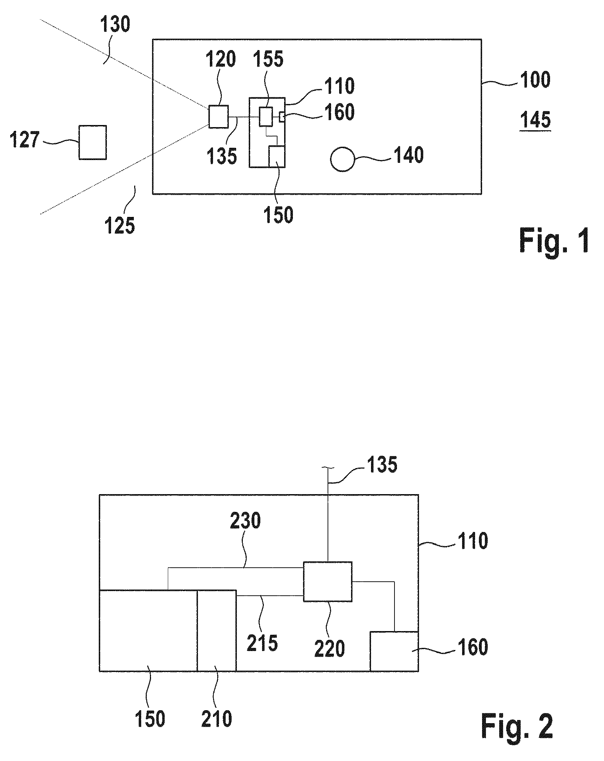

Fig. 1 zeigt ein Blockschaltbild eines Fahrzeugs 100, in dem eine Vorrichtung 110 gemäß einem Ausführungsbeispiel der vorliegenden Erfindung verwendet wird. Ferner umfasst das Fahrzeug eine Kamera 120, welche eine Fahrzeugumgebung 125 mit einem darin befindlichen Objekt 127 in einem Sichtbereich 130, insbesondere vor dem Fahrzeug erfasst, und ein entsprechendes Bild 135 an die Vorrichtung 110 zur Unterstützung eines Fahrers 140 bei einer Spurführung des Fahrzeugs 100 auf einer Fahrbahn 145 übermittelt. Die Vorrichtung 110 umfasst dabei eine Anzeigeeinheit 150, auf der das Kamerabild 135 angezeigt werden kann. Die Anzeigeeinheit 150 enthält dabei einen berührungsempfindlichen Bildschirm, wobei der Fahrer 140 des Fahrzeugs durch einen Druck mit dem Finger auf den Bildschirm ein Objekt im Kamerabild 135 auswählen kann, welches als Basis für die Bestimmung des von dem Fahrzeug zu befahrenden Fahrwegs dienen soll. Dabei kann eine zentrale Steuereinheit 155 die Funktion übernehmen, einerseits das Kamerabild 135 an die Anzeigeeinheit 150 zu übermitteln und andererseits die Eingabe vom Fahrer 140 über den berührungsempfindlichen Bildschirm einzulesen. Weiterhin kann in der Steuereinheit 155 eine Markierung als Markierungssymbol oder Markierungsobjekt ausgewählt werden und demjenigen Bereich des Kamerabildes 135 überlagert werden, der das ausgewählte Objekt repräsentiert. Anschließend wird das mittels der Markierungen überlagerte Bild wieder an die Anzeigeeinheit 150 übersandt, wo es dem Fahrer 140 dargestellt wird. Zugleich kann in der Steuereinheit 155 das markierte Objekt als Basis für die Bestimmung der vom Fahrzeug zu befahrenden Spur, d.h. des vom Fahrzeug zu befahrenden Fahrwegs verwendet werden, um beispielsweise in einer speziellen Spurführungseinheit 160 eine automatische Verfolgung dieses Objekts, das heißt eine automatische Längs- und/oder Querführung des Fahrzeugs vorzunehmen oder dem Fahrer 140 Signale zu übermitteln, die dem Fahrer 140 Anweisungen oder Hinweise geben, wie er das Fahrzeug möglichst schnell, energiesparend oder komfortabel in einer durch das Objekt definierten Spur führen kann. Unter einer "Spur" ist dabei eine gewünschte Trajektorie zu versehen, die das Fahrzeug fahren soll. Diese gewünschte (Fahr-) Trajektorie kann einerseits z.B. ein durch Fahrbahnmarkierungen gekennzeichneter Fahrstreifen sein, andererseits kann diese Trajektorie (beispielswiese bei nicht markierten Fahrbahnen) eine Trajektorie sein, die von einer Rechnereinheit im eigenen Fahrzeug berechnet und dann als zu befahrende "Spur" ausgegeben wird. Auf diese Weise kann auch bei nicht markierten Fahrbahnen noch eine "Spur" erhalten werden, die von dem eigenen Fahrzeug befahren werden soll, um eine möglichst effiziente Assistenz des Fahrers bei der Führung des Fahrzeugs zu ermöglichen. Die zu befahrende "Spur" sollte dabei unter Berücksichtigung des Objektes bestimmt werden. Insbesondere wird dabei eine "Spur" bestimmt, auf der auch das Objekt fährt, so dass sichergestellt werden kann, dass bei der Bestimmung der zu befahrenden oder der zu folgenden "Spur" nur diejenigen Trajektorien überhaupt in Frage kommen, die auch einen Bezug zum Objekt haben, dem vorliegend gefolgt werden soll.

Fig. 2 zeigt ein detaillierteres Blockschaltbild einer Vorrichtung 110 zur Unterstützung des Fahrers bei der Spurführung eines Fahrzeugs auf einer Fahrbahn. Dabei umfasst die Vorrichtung 110 die Anzeigeeinheit 150 und eine Bedienungsschnittstelle 210, die beispielsweise in Form der berührungsempfindlichen Oberfläche des Bildschirms der Anzeigeeinheit 150 oder als Mikrofon zur Erkennung von Sprachsignalen ausgebildet ist und welche ein Bedienungssignal 215 bereitstellt. Die Bedienungsschnittstelle kann sich auch weiter entfernt von der Anzeigeeinheit 150 befinden, z.B. durch einen Joystick oder ein Touchpad auf der Mittelkonsole oder durch einen Quergeber im Gaspedal gebildet sein. Ferner umfasst die Vorrichtung 110 eine Auswahleinheit 220, die im zentralen Steuergerät 155 angeordnet sein kann und die ansprechend auf das Bedienungssignal 215 ein in dem Bild enthaltenes Objekt auswählt und eine entsprechende Markierung dem Kamerabild 135 überlagert, um ein entsprechendes aufbereitetes Kamerabild 230 zu erhalten. Auch kann die Auswahleinheit 220 dieses mit der Markierung überlagerte Kamerabild 230 wieder an die Anzeigeeinheit 150 übertragen, auf der dieses überlagert die Kamerabild 230 dann angezeigt wird. Zusätzlich weist die Vorrichtung die vorstehend genannte Spurführungseinheit 160 auf.

Allen bisher bekannten Fahrerassistenzsystemen ist gemeinsam, dass sie den Fahrer nur wenig über die Objekterfassung durch die Sensoren informieren und dass sie ihm wenig oder gar keine Einflussmöglichkeiten geben, beispielsweise welchem Fahrzeug gefolgt werden soll.

Die vorliegende Erfindung strebt insbesondere an, diesen Mangel zu beheben und beschreibt ein Fahrerassistenzsystem, das auf bisher nicht bekannte Weise mit dem Fahrer interagiert. Dazu nutzt es mindestens eine Kamera zur Beobachtung des Fahrzeugumfelds (insbesondere nach vorne) und einen Bildschirm zur Darbietung des gegebenenfalls aufbereiteten Kamerabilds und möglichen Zusatzinformationen.

Als Grund für die Unzufriedenheit mit ihren Fahrerassistenzsystemen geben Kunden häufig an, dass ihnen das Verhalten des Systems des Öfteren nicht plausibel ist. Es mangelt an der Nachvollziehbarkeit, warum sich das System gerade so verhält. Dies trifft insbesondere dann zu, wenn sich das Systemverhalten deutlich von dem vom Fahrer in diesem Moment erwarteten oder bevorzugten Verhalten unterscheidet.

Eine Ursache für diesen Mangel liegt in Schwächen der Sensoren begründet (z. B. mangelnde Reichweite bei sehr schneller Autobahnfahrt, zu späte Erfassung von relevanten Einscherern, Auftreten von Scheinobjekten). Das erfindungsgemäße Verfahren behebt den Mangel an Systemtransparenz und desweiteren den damit verbundenen Mangel an Einflussmöglichkeiten für den Fahrer. Die Grundlage hierfür schafft ein neuartiger Algorithmus zur videobasierten Objektverfolgung. Dieser ermöglicht u. a. eine nützliche Visualisierung der Objektverfolgung im Videobild, die vom Fahrer als exakt, stabil und zuverlässig und damit als hochwertig wahrgenommen wird.

Das in dieser Beschreibung vorgestellte System verwendet einen Bildschirm (Display), um dem Fahrer zu jedem Zeitpunkt die für ihn wichtigen Informationen bezüglich der Fahrerassistenz bzw. der Fahraufgabe darzustellen. Der Bildschirm kann auch durch die Windschutzscheibe gebildet werden, wobei dann relevante Informationen auf diese Scheibe eingeblendet werden.

Auf diesem Bildschirm wird gewöhnlich das Bild einer in Fahrtrichtung orientierten Kamera angezeigt. Dieses Bild wird beispielsweise ferner angereichert mit Informationen, die für den Fahrer interessant oder wichtig sind. Weiterhin wird der Fahrer gemäß einem Ausführungsbeispiel mittels Bildschirm über seine Auswahlmöglichkeiten informiert, die er per Interaktion mit dem System treffen kann.

Zusatzinformationen des Systems, die andere Objekte, z. B. Fahrzeuge, betreffen, werden im Bild fest mit dem Objekt verbunden, sie wirken sozusagen scheinbar an das Objekt "angeklebt". Die nachfolgende Systembeschreibung basiert also insbesondere auf den Fähigkeiten eines Algorithmus, der solche Objektinformationen zusammen mit einem Objekt darstellt, wobei ein solcher Algorithmus eine wichtige Voraussetzung für die praktische Umsetzbarkeit der Erfindung schafft.

Die Funktionsweise der hier in einem Ausführungsbeispiel beschriebenen Erfindung basiert auf Daten von zumindest einem Umfeldsensor (bevorzugt Video, alternativ Range-Video (Lichtlaufzeitmessung), Radar, Lidar, Ultraschall oder Kombinationen davon). Diese Daten betreffen

- insbesondere die Längsregelung des Egofahrzeugs (d.h. des eigenen Fahrzeugs, in dem der Fahrer sitzt), gegebenenfalls auch die Querregelung und/oder
- eine Ausgabe von Fahranweisungen, die den Fahrer bei der Aufgabe der Längs-/Querregelung unterstützen.

Das System gemäß dem Ausführungsbeispiel der Erfindung wird nachfolgend anhand der Phasen einer Objektverfolgung näher beschrieben. Zwischendurch werden Ausgestaltungsvarianten diskutiert.

1. Phase: Objektauswahl

Das System kann (wahlweise oder je nach Verfügbarkeit einer Objektdetektion) mit oder ohne automatische Objektdetektion betrieben werden:

- Falls keine Objektdetektion vorhanden ist oder falls sie nicht verwendet wird, kann der Fahrer die Objektauswahl selbst vornehmen. Dazu berührt er mit beispielsweise einem Finger auf dem berührungsempfindlichen Display (Touchscreen) dasjenige angezeigte Objekt, dem er folgen will.

Dazu sollte sich der Touchscreen an einer geeigneten Stelle befinden, so dass die Berührung mit einem Finger leicht möglich ist. Eine Positionierung hinter dem Lenkrad wäre hier weniger günstig.

Alternativ können Display und Eingabeelement auch baulich getrennt sein. Beispielsweise kann das Eingabeelement ähnlich einem PC-Grafiktablett oder ähnlich einem Touchpad von Notebook-PCs ausgeführt sein und sich auf der Mittelkonsole oder am Lenkrad oder an einer sonstigen für den Fahrer leicht erreichbaren Stelle befinden.

Nachdem der Fahrer das Objekt z. B. durch Antippen mit dem Finger ausgewählt hat, beginnt ein Objekt-Tracking-Algorithmus die Verfolgung. Dabei werden (beispielsweise mit dem "AnyTrack"-Algorithmus von Bosch) gleichzeitig die Objektbewegung im Bild, die Größenveränderung (Skalierung) im Bild und die Objektabmessungen im Bild bestimmt. Hierdurch wird es möglich, eine Zusatzinformation (d.h. eine Markierung) in das Bild (insbesondere im Bereich des zu verfolgenden Objektes) einzublenden, die die richtige Größe besitzt und die ermittelten Bewegungs- und Skalierungsdaten verwendet.

Diese Zusatzinformation kann im einfachsten Fall aus einem an sich unveränderlichen (aber mitbewegten und mitskalierten) Bild als Markierung bestehen, z. B. aus dem Bild eines Fingerabdrucks. Dieses Bild des Fingerabdrucks erscheint dann wie angeklebt an das Fahrzeug.

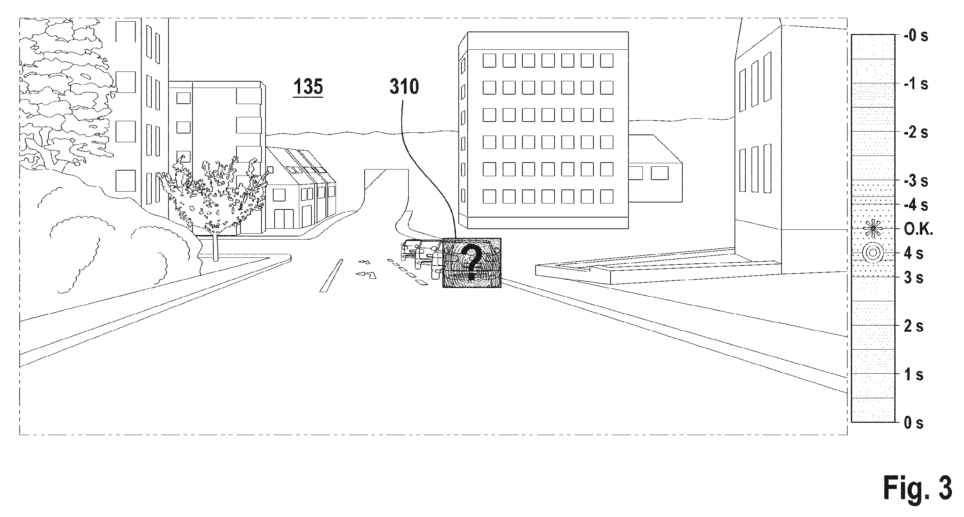

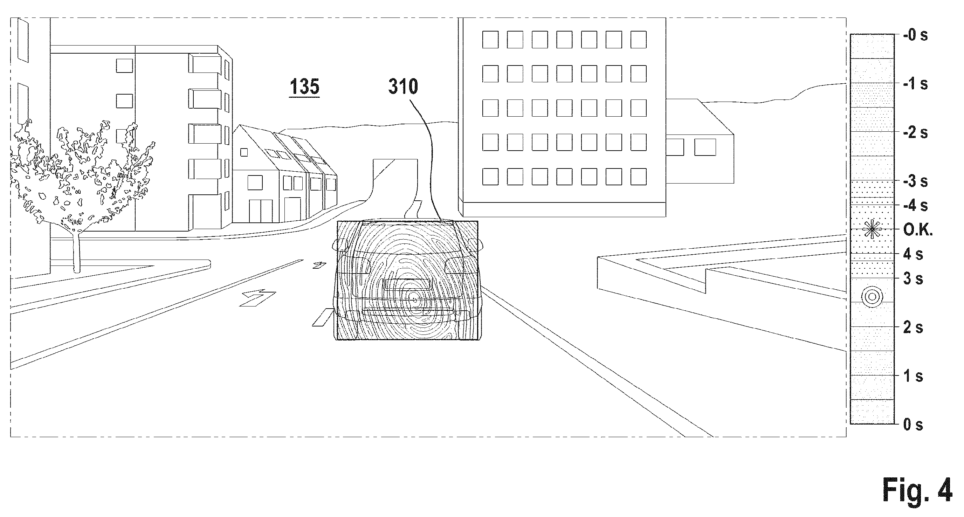

Fig. 3 zeigt eine Darstellung eines solchen von der Kamera des Fahrzeugs aufgenommenen Bildes, wobei ein mögliches zu verfolgendes Objekt 300 auf einer Fahrspur für den Geradeaus-Verkehr bereits erkannt wurde und zur Auswahl mit einem Fragezeichen vormarkiert wird. Durch das Anzeigen eines Fragezeichens und des Abbilds eines Fingerabdrucks auf dem Objekt 300 wird dem Fahrer somit angeboten, die automatische Längs- und ggf. Querführung bezüglich dieses Zielobjekts zu starten. Durch einen Fingerdruck auf den berührungsempfindlichen Bildschirm nimmt der Fahrer das Angebot an. Auf der rechten Seite der Darstellung ist eine Skala aufgetragen, in der eine Zeitspanne eingetragen ist, die bei konstant bleibender aktueller Geschwindigkeit noch vergehen würde, bis das Fahrzeug mit dem gewählten bzw. markierten Objekt kollidieren würde. Wählt der Fahrer des Fahrzeugs dieses Objekt aus, wird das Fragezeichen als Vormarkierung entfernt und ein Fingerabdruck 310 als Markierung des ausgewählten Objektes 310 dem Kamerabild überlagert und auf der Anzeigeeinheit dargestellt, so dass auf einem Bildschirm der Anzeigeeinheit eine Darstellung gemäß der Fig. 4 abgebildet wird. Nach der Bestätigung des Zielobjekts durch den Fahrer wird somit das Fragezeichen nicht mehr angezeigt. Der weiterhin dauerhaft sichtbare und fest mit dem Zielobjekt verbundene Fingerabdruck gibt dem Fahrer zu erkennen und bestätigt ihm, dass sich die Längs- und gegebenenfalls Querführung auf das von ihm zuvor per Fingerberührung ausgewählte Fahrzeug bezieht. Eine Farbe der Darstellung des Fingerabdrucks (als Markierung) kann gemäß einer vorbestimmten Farbskala gewählt werden, die nachfolgend noch erläutert wird. Die Farbe korrespondiert beispielsweise zur verbleibenden Zeit bis zur Kollision und stellt somit eine Korrespondenz zur die Dringlichkeit des (Brems-)Eingriffs her. Tiefrot kann beispielsweise einen "besonders dringenden" erforderlichen Bremseingriff durch den Fahrer erfordern.

• Falls ein Detektionsalgorithmus vorhanden ist, der bereits selbstständig das oder die relevante(n) Objekt(e) detektiert hat, können diese dem Fahrer zur Auswahl bzw. zur Bestätigung angeboten werden. Dies erfolgt durch eine geeignete visuelle Darstellung im Display, z. B. indem das/die Objekt(e) hervorgehoben werden und zusammen mit dem jeweiligen Objekt ein Symbol angezeigt wird, das dem Fahrer anzeigt, dass er eine Wahlmöglichkeit hat bzw. das eine Bestätigung von ihm erwartet wird.

Im einfachsten Falle wird auch hier wieder ein unveränderliches (aber mitbewegtes, mitskaliertes) Bild verwendet, zum Beispiel das Bild eines Fingerabdrucks mit einem Fragezeichen. Das Bildsymbol sollte so gewählt sein, dass auch dem mit dem System unerfahrenen Fahrer möglichst schnell und unmissverständlich klar wird, dass von ihm eine Eingabe auf bestimmte Weise erwartet wird, hier z. B. der Druck mit dem Finger auf das Display.

Durch den Fingerdruck wählt der Fahrer eines von ggf. mehreren Objekten aus. Die Verfolgung dieses "Zielobjekts" beginnt.

Das bedeutet, dass fortan z. B. eine automatisch Längsregelung und/oder eine Querführung bezüglich des Objekts durchgeführt wird oder aber dass der Fahrer bei der Fahrzeugführung Unterstützung erhält, z. B. in Form akustischer oder haptischer oder visueller Signale, die ihn zum Bremsen oder Beschleunigen oder Lenken auffordern.

Besonders vorteilhaft bei der interaktiven Objektauswahl ist eine "Snap-to-Object"-Funktion zur Vereinfachung der Eingabe: Dabei darf die Eingabe des Benutzers ungenau sein, auch leicht neben dem Objekt liegen. Das System unterstützt den Fahrer, indem es automatisch das mit der Eingabe wahrscheinlich gemeinte Objekt auswählt. Diese Funktion verkürzt die für die Eingabe notwendige Zeit noch weiter und verringert die notwendige Dauer für den Blick auf das Display.

Varianten: Interface

• Als Interface zum Fahrer ist, wie bereits beschrieben, ein Touchscreen besonders gut geeignet. Dieser sollte jedoch nur verwendet werden, wenn er so platziert ist, dass während der Fahrt Bildschirmberührung ohne Gefahr möglich ist.

- Alternativ können sich der Bildschirm und die berührungssensitive Fläche auch an verschiedenen Orten befinden.

- Besonders bevorzugt ist in diesem Fall ein Head-Up- Display (HUD), insbesondere wenn dieses dazu geeignet ist, eine so genannte kontaktanaloge Darstellung zwischen einer überlagerten Informationseinblendung und dem betreffenden Zielobjekt zu realisieren. Für den Fahrer könnte dies dann etwa so aussehen wie in Fig. 3 bis Fig. 5 oder Fig. 10 gezeigt, wobei man sich hier statt des Grauwertbildes der Kamera den Blick durch die Frontscheibe in die reale Welt vorstellen sollte.

- Alternativ können auch ein Bildschirm (bzw. HUD) und ein Touchscreen gleichzeitig verwendet werden. Der Bildschirm (bzw. HUD) befindet sich dabei vorzugsweise im bevorzugten Sichtfeld des Fahrers, z. B. in der Instrumententafel oder darüber, während der Touchscreen seitlich davon und gegebenenfalls auf anderer Höhe angebracht ist.

- Bei einem Touchscreen ist eine Zuordnung zwischen dem Berührpunkt und dem Bildpunkt automatisch gegeben. Wenn berührungssensitive Fläche und Display jedoch baulich getrennt sind, bieten sich für die Interpretation des Berührpunkts verschiedene Möglichkeiten an:

    ◦ Einerseits können die Koordinaten des Berührpunkts weiterhin proportional in einen Bildpunkt umgerechnet werden. Dann verhält sich die berührungssensitive Fläche so wie ein Grafiktablett, wie es von Designern für die PC-Eingabe verwendet wird.
    ◦ Besteht eine nichtlineare und/oder zeitlich veränderliche Beziehung zwischen Berührpunkt und Bildpunkt, so kommt das Verhalten eher einem Touchpad nahe, wie es von Notebook-Computern bekannt ist.

- Alternativ zum Touchscreen, bei dem für die Eingabe eine echte Berührung erforderlich ist, kommt auch eine berührungslose Sensorik in Frage, z. B. mit kapazitiver Sensorfläche oder mit optischer Erfassung der Finger- oder Handposition im Raum oder mit optischer Erfassung der Blickrichtung des Fahrers.

- Alternativ kann das Eingabeelement auch ein Kraft- oder Bewegungssensor sein, der von wenigstens einem Finger berührt und gesteuert wird. Die Anzahl der Freiheitsgrade kann sich dabei nach der Funktion richten. Zum Beispiel genügen ein Freiheitsgrad links/rechts zum Wechseln auf das nächste angebotene Objekt und ein Drücken zum Auswählen des Objekts. Bei zwei Freiheitsgraden (zusätzlich oben/unten) kann bereits das ganze Bild angesteuert und das Objekt rein manuell ausgewählt werden. Noch ein weiterer Freiheitsgrad (groß/klein im Bild, gleichbedeutend mit nah/fern in der Welt) kann dazu genutzt werden, um auch den Entfernungsbereich des Objekts auszuwählen.

- Alternativ kann das Eingabeelement auch so gestaltet sein, dass es von mehr als einem Finger berührt oder angefasst wird. Dies ist umso ratsamer, je mehr Freiheitsgrade der Eingabe vorgesehen sind.

- Alternativ kann das Eingabeelement ähnlich einer PC-Maus ausgeführt sein, wobei es in mehrere Richtungen verschiebbar ist und mit geeigneten Mitteln gegen Wegrutschen zu halten ist, z. B. magnetisch und mit Flüssigkeitsdämpfung.

- Optional oder alternativ kann auch eine Fußbedienung vorgesehen sein, z. B. mit einem Fußpedal, das seitliche Kräfte oder Bewegungen des Fußes erfassen kann.

- Optional oder alternativ kann auch eine Sprachbedienung vorgesehen sein. Dabei können die Sprachkommandos an die Erkennungsmöglichkeiten des Systems angepasst sein. Beispiele:

    ◦ "Folge dem roten Auto!"
    ◦ "Folge dem Kennzeichen HI-ER 377!"
    ◦ "Folge dem Mercedes Kombi!"
    ◦ "Folge dem Lkw!"
    ◦ "Folge dem Vordermann!"
    ◦ "Folge dem Pkw rechts!"

Zumindest einige der Optionen, die sich durch die Sprachbedienung ergeben, können dem Fahrer in Form von Farben, Textinformationen und/oder Bildsymbolen im Display angezeigt werden. Beispielsweise kann

    ◦ die erkannte Objektfarbe angezeigt oder namentlich ausgeschrieben oder
    ◦ die erkannte Fahrzeugmarke also Logo angezeigt oder als Wort ausgeschrieben oder
    ◦ das Kennzeichen gut lesbar ausgeschrieben oder
    ◦ die Objekte mit Symbolen (Pkw, Lkw, Kombi, Wohnwagen, Motorrad und dergleichen) gekennzeichnet werden.

- Auch ist denkbar, dass das System nicht nur über eine Spracheingabe, sondern auch über eine Sprachausgabe verfügt. Dann kann es Auswahlmöglichkeiten aufsagen (ähnlich der Sprachbedienung beim Telefonbanking oder bei der automatischen telefonischen Fahrplanauskunft) oder gezielte Fragen stellen, beispielsweise:

    ◦ Wollen Sie dem Einscherer von rechts folgen?
    ◦ Wollen Sie weiterhin dem schwarzen Fahrzeug folgen?
    ◦ Wollen Sie dem abbiegenden Fahrzeug folgen?

  ◦ Wollen Sie die Verfolgung nun abbrechen?

Phase: Bestätigung

Sobald der Fahrer eine Auswahl getroffen hat oder gegebenenfalls auch wenn er es versäumt hat diese zu treffen, gibt das System in einer vorteilhaften Ausgestaltung eine Rückmeldung an den Fahrer, damit dieser über den neuen Systemzustand informiert ist. Der sinngemäße Inhalt der Rückmeldung wird häufig sein "Objektauswahl in Ordnung, das System folgt nun dem ausgewählten Objekt!", sie kann aber auch lauten "Das System kann die Verfolgung nicht übernehmen!", z. B. wenn der Fahrer eine nicht eindeutige Angabe gemacht hat oder wenn das System an der berührten Bildposition kein Objekt finden kann, dem gefolgt werden könnte.

Die Bestätigung kann akustisch erfolgen, z. B. durch einen Quittungston oder eine Sprachansage, z. B. "Das vorausfahrenden Fahrzeug wird nun verfolgt. Die hier zugelassene Geschwindigkeit von 70 km/h wird berücksichtigt.".

Die Bestätigung kann auch haptisch erfolgen, z. B. durch eine kurze Vibration am Lenkrad oder am Eingabeinterface, das zu diesem Zeitpunkt noch von der Hand des Fahrers berührt wird, oder durch eine Vibration eines anderen Elements (z. B. Fußpedal oder Sitz), die der Fahrer wahrnehmen kann.

In der Regel wird die Signalisierung auch optisch erfolgen, z. B. indem die Display-Darstellung sich ändert und somit eine Markierung desjenigen Objektes anzeigt, das ausgewählt wurde. Beispielsweise würde das oben beschriebene dargestellte Fragezeichen auf dem Fingerabdruck verschwinden und nur noch der Fingerabdruck (weiterhin "angeklebt" an das Objekt) verbleiben, wie dies in den Figuren 3 und 4 dargestellt ist.

Phase Objektverfolgung

Gleichzeitig mit der Bestätigung beginnt die Phase der Objektverfolgung, die in der Regel lange dauert, z. B. so lange, bis das Zielobjekt eine andere Richtung oder einen anderen Fahrstreifen wählt als der Fahrer oder zu schnell oder zu langsam fährt.

In der Phase der Objektverfolgung kann das Display dazu genutzt werden, dem Fahrer nützliche oder wenigstens interessante Zusatzinformationen darzustellen, die sich auf das Objekt beziehen (selbstverständlich auch solche, die nicht in direktem Zusammenhang mit dem Objekt stehen, wie z. B. Informationen über gerade gültige Verkehrsschilder, Navigationshinweise und dergleichen).

Bereits ein einfaches kontinuierliches visuelles Kennzeichnen des Objekts im Bild kann für den Fahrer interessant und nützlich sein. Es gibt ihm die Bestätigung, dass das System sich immer noch korrekt verhält und das Zielobjekt nicht verloren hat. Außerdem vermittelt eine präzise Verfolgung im Bild ein Gefühl für die Qualität der Messung - wichtig für das Vertrauen zum System und die Wertempfindung.

Das Einzeichnen des Objekts kann beliebig "angereichert" werden, z. B. mit animierter Grafik, mit farblicher Hervorhebung, mit Zahlen und Text, mit Skalen und Messzeigern und dergleichen. Bei der Ausgestaltung können Ästhetik oder Informationsvermittlung im Vordergrund stehen.

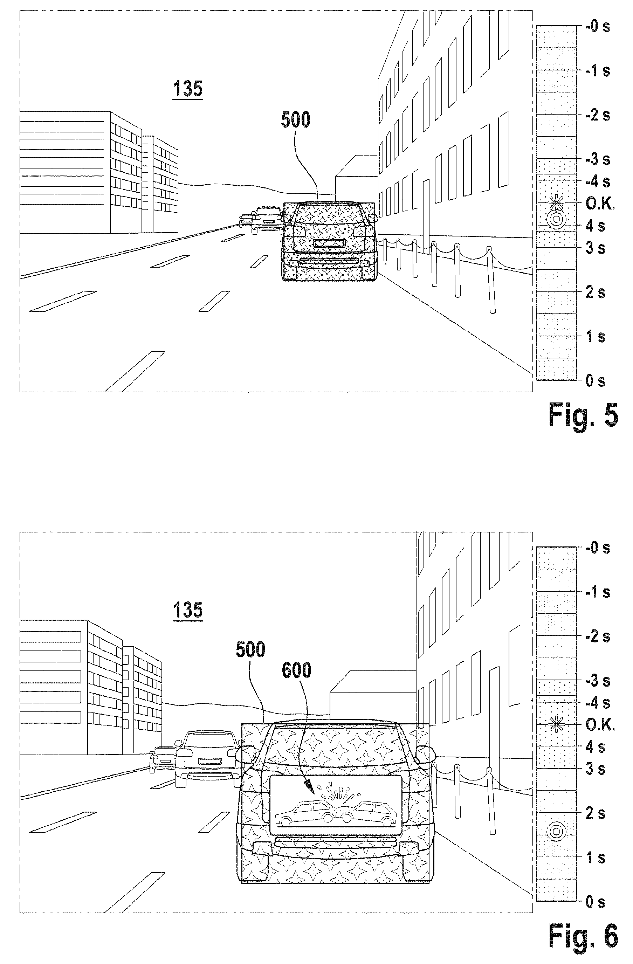

In der Fig. 5: ist eine solche Darstellung eines Objektes mit einer Zusatzinformation wiedergegeben. Hier handelt es sich um ein automatisch vom System ausgewähltes Objekt. Daher wird anstatt des Fingerabdrucks ein anderes Symbol, hier ein Muster 500, als Markierung überlagert dargestellt. Es ist jedoch auch denkbar, dass ein vom Fahrer ausgewähltes Objekt mit einer Markierung sowie zumindest einer Zusatzinformation versehen und angezeigt wird.

Nachfolgend wird die Bestimmung der Zeit bis zu einer Kollision mit dem Objekt (im Folgenden auch als TTC oder $T_{TC}$ abgekürzt; TTC = Time to Collision = Zeit bis zur Kollision) näher beschrieben.

Von besonderem Interesse für eine visuelle Abstandsregelung ist die so genannte "Time to Collision ($T_{TC}$)", also die Zeit, die noch verstreicht, bis (z. B. unter Fortschreibung der aktuellen Fahrtsituation) eine Kollision mit dem Objekt eintreten würde.

Die $T_{TC}$-Ermittlung und Ansätze für ihre Kamera-basierte Bestimmung werden nachfolgend näher dargestellt, einschließlich der visuellen oder Kamerabasierten Bestimmung und der Diskussion von typischen Fahrsituationen.

Bei der Bestimmung der $T_{TC}$ kann eine Prädiktion mit einbezogen werden, die entweder davon ausgeht, dass der aktuelle Fahrzustand bis zum Kollisionszeitpunkt beibehalten wird oder die auch künftige absehbare neue Fahrzustände mit einbezieht.

Zu den Größen, die zur Prädiktion verwendet werden, können gehören:

• Die Skalierung s der Objektabmessungen (z. B. des Abstands im Bild von zwei Punkten auf dem Objekt) zwischen zwei Bildern;
• Die eigene Fahrzeuggeschwindigkeit und davon abgeleitete Größen.

Die nachfolgend beschriebene $T_{TC}$ bezieht sich auf den Zeitpunkt der Kollision des Objekts (genauer: der auf dem Objekt beobachteten Punkte) mit der Kamera. Für die praktische Anwendung ist jedoch der Kollisionszeitpunkt mit der eigenen Fahrzeugfront von Interesse.

Betrachtet wird ein vereinfachtes Szenario mit konstanter Differenzgeschwindigkeit $v = v_{Ego} - v_{Obj}$ zwischen dem Ego-Fahrzeug (d.h. dem eigenen Fahrzeug) und einem kollisionsrelevanten Objekt. Negative Differenzgeschwindigkeit bedeutet, dass sich die Objekte aufeinander zu bewegen. Der aktuelle Abstand sei d. Die Zeit bis zur Kollision ist dann

$$T_{TC} = -\frac{d}{v}.$$

Eine mit dem Ego-Fahrzeug verbundene Kamera verfolge auf dem Objekt zwei Punkte, deren Abstand parallel zur Kameraebene W beträgt. Im Bild der Kamera, gemäß Lochkameramodell, mit Brennweite f ergibt sich somit ein Abstand

$$w = \frac{Wf}{d}.$$

Zu dem um die Zeitdifferenz T früheren Zeitpunkt galt dagegen

$$w_p = \frac{Wf}{d - vT}.$$

Definiert man $s = \dfrac{w}{w_p}$ als Skalierungsfaktor zwischen den verschieden großen Abbildern der Strecke W, so ergibt sich

$$s = \frac{w}{w_p} = \frac{d - vT}{d} = 1 - \frac{v}{d}T = 1 + \frac{T}{T_{TC}}$$

oder

$$T_{TC} = \frac{T}{s - 1}.$$

Nachfolgend werden einige typische Situationen betrachtet.

Bei einer Folgefahrt mit konstantem Abstand bleibt die Bildgröße unverändert, es gilt $w = w_p$ oder $s = 1$. Damit wird die Zeit bis zu einer Kollision unendlich, $T_{TC} = \infty$. Ein Längsregler für die Folgefahrt hinter einem Objekt, der Beschleunigung und Bremsung steuert, wird also diesen Punkt $T_{TC} = \infty$ anstreben.

Bei einer Annäherung an ein Objekt gilt $w > w_p$ oder $s > 1$. Demnach ist die $T_{TC}$ positivwertig. Ein Zahlenbeispiel: Mit einer Bildperiode von $T = 40$ ms und Abständen von $w = 102$ Pixel und $w_p = 100$ Pixel ergibt sich $T_{TC} = 2{,}0$ s.

Entfernt sich das Objekt, z. B. ein Überholer, so gilt $w < w_p$ oder $s < 1$. Die $T_{TC}$ ist negativwertig.

Zum Zeitpunkt der Kollision $T_{TC} = 0$ oder sehr nahe davor oder danach geht der Skalierungsfaktor s gegen $+\infty$. oder $-\infty$.

Mit Kenntnis der Ego-Geschwindigkeit $v_{Ego}$ kann die $T_{TCCam}$ bezüglich der Kamera umgerechnet werden in eine $T_{TCFront}$ bezüglich der Fahrzeugfront (z. B. Stoßstange): $T_{TCFront} = T_{TCCam} - I/v_{Ego}$. Dabei ist die Länge I der Abstand in Längsrichtung (Fahrtrichtung) zwischen Kamera und Fahrzeugfront. Beispiel: Bei I = 2 m und $v_{Ego} = 20$ m/s ist $T_{TCFront}$ um 0,1 s geringer als $T_{TCCam}$.

Diese Berechnung stellt eine Vereinfachung dar, weil sie die Geschwindigkeit des Objekts $V_{Obi}$ unberücksichtigt lässt. Da bei dem betrachteten Szenario der Vorwärtsfahrt des Ego-Fahrzeugs und abgesehen von der Rückwärtsfahrt des Vorderfahrzeugs die Ego- Geschwindigkeit betragsmäßig immer größer als die Differenzgeschwindigkeit ist, handelt es sich bei der Vereinfachung um eine Abschätzung zur sicheren Seite: Die so bestimmte $T_{TCFront}$ ist also in der Regel etwas geringer als die tatsächliche $T_{TC}$.

Selbstverständlich ist es auch möglich, statt der Eigengeschwindigkeit $v_{Ego}$ die Differenzgeschwindigkeit $V_{Diff}$ einzusetzen, falls diese verfügbar ist.

Es ist in jedem Fall sinnvoll, mit der $T_{TCFront}$ zu arbeiten. eventuell sogar mit einer $T_{TC}$, die sich auf eine Ebene noch vor der Fahrzeugfront bezieht (Sicherheitsreserve).

- In die Bestimmung der TTC können noch weitere Größen einbezogen werden. Die eigene Beschleunigung (z. B. von einem Beschleunigungssensor gemessen oder aus der Geschwindigkeit abgeleitet oder modellbasiert aus der Motor-/Bremsanforderung abgeleitet).
  Wenn die eigene Beschleunigung in die Bestimmung der TTC einbezogen wird, verhält sich die so berechnete $T_{TC}$ im Allgemeinen dynamischer.
  Diese höhere Dynamik bietet für den Fahrer den Vorteil, dass er schneller eine Rückmeldung bezüglich der eigenen Beschleunigung oder Verzögerung erhält. Er wird also direkter über die Auswirkungen eines automatischen (oder auch manuellen) Eingriffs in die Längsregelung informiert.
  Weitere funktionsrelevante Größen, die Einfluss auf die TTC haben, sind:

- Der Systemzustand des Bremssystems (zur Reduktion der Auswirkung von Totzeiten), z. B. ob eine Bremsung bereits eingeleitet ist, die sich nach Aufbau des Bremsdrucks auf die $T_{TC}$ auswirken wird.

- Weitere Sensordaten, z. B. von Drehratensensoren oder Lenkwinkelsensor oder Einzelradsensoren oder Federwegsensoren, an denen erkannt werden kann, dass ein Ausweichmanöver eingeleitet wurde, das eine Kollision ggf. verhindert.

- Selbstverständlich können auch Messdaten weiterer Umfeldsensoren berücksichtigt werden, z. B. Radar- Sensor (Messung von Geschwindigkeit und Abstand) oder Lidar-Sensor (Messung des Abstands mittels Lichtlaufzeit) oder Stereo-Kamera (Messung einer Vielzahl von Abständen mittels Triangulation) oder Range-Kamera (Messung einer Vielzahl von Abständen mittels Lichtlaufzeit) oder Ultraschallsensor (Messung des Abstands mittels Schall-Laufzeit).

Um einem Fahrer möglichst frühzeitig eine Information über eine drohende Kollision zu geben, kann hierzu die Markierung, die im Bereich des Objektes im Bild dargestellt wird, zeitlich verändert werden. Beispielsweise kann gemäß der Fig. 6, wenn das System festgestellt hat, dass die Zeit bis zu einer Kollision nur noch 1,6 Sekunden beträgt, eine Warnung des Fahrers erfolgen. Insbesondere wenn die Längsregelung nicht automatisch, sondern durch den Fahrer erfolgt, ist es sinnvoll, ihn vor einer möglichen Kollision zu warnen. Hier erfolgt die optische (und gegebenenfalls. akustische / haptische) Warnung, sobald eine $T_{TC}$ von etwa 2,0 Sekunden unterschritten wird. Diese zeitliche Warnschwelle ist so gewählt, dass dem Fahrer noch genügend Zeit bleibt, um zu reagieren, sein Fahrzeug abzubremsen und damit die drohende Kollision zu verhindern. In einem solchen Fall kann beispielsweise als Zusatzinformation ein Symbol 600 von zwei aufeinander aufprallenden Fahrzeugen im Bereich des Objektes eingeblendet werden.

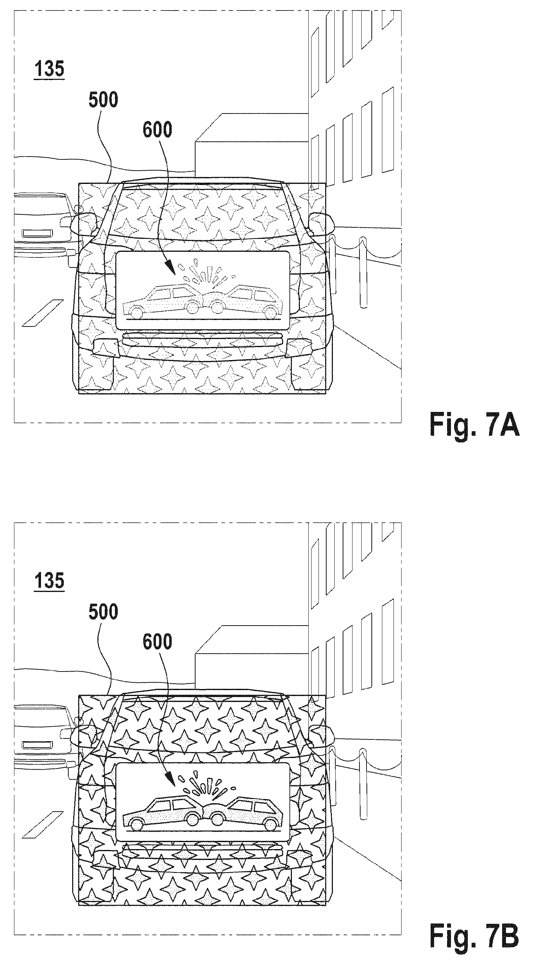

Die Wahrnehmbarkeit der optischen Warnung und die schnelle und korrekte örtliche Erfassung lässt sich noch verbessern, wenn die optische Warnung zeitlich pulsiert, z. B. mit einer Frequenz von zwei bis fünf Pulsperioden pro Sekunden, wie dies in den Figuren 7A und 7B dargestellt wird, wobei die Figur 7B eine Darstellung des Bildes mit der Markierung und Zusatzinformation in einem zeitlichen Abstand von beispielsweise 0,2 s nach der Darstellung gemäß der Fig. 7A repräsentiert. Dabei kann beispielsweise die Intensität und die Größe der farblichen Überlagerung zeitlich - z. B. sinusförmig, sägezahnförmig oder rechteckförmig - variieren. Die Anzeige pulsiert also zwischen einer schwachen und einer verstärkten Intensität, wie hier anhand von zwei Momentaufnahmen gezeigt. Es ist vorteilhaft, die Pulsamplitude und/oder die Frequenz abhängig von der $T_{TC}$ zu wählen, z. B. so, dass diese Werte mit zunehmender Gefährdung weiter ansteigen.

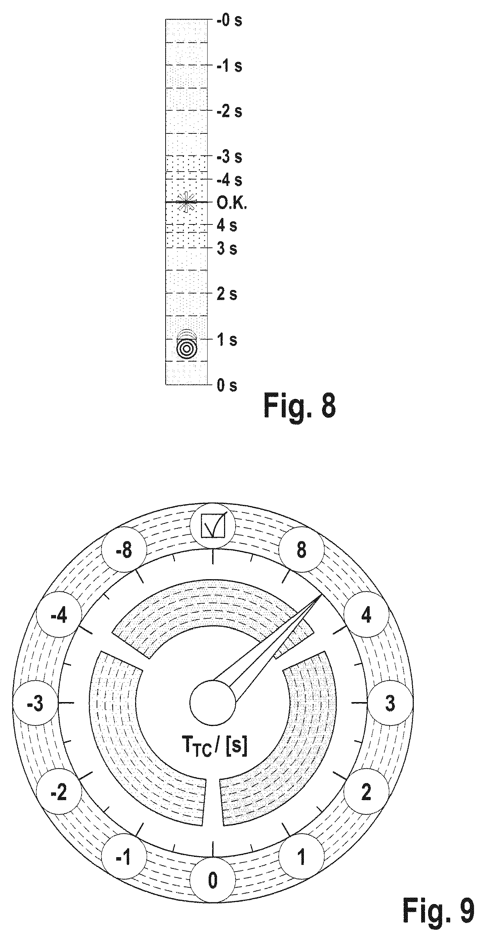

Es kann vorteilhaft sein, dem Fahrer die TTC auch visuell darzustellen. Mögliche Darstellungsvarianten sind in Fig. 8 und Fig. 9 gezeigt. Fig. 8 zeigt dabei eine Darstellung einer möglichen Visualisierung der TTC in der Form eines Balkendiarammes. In der Fig. 9 ist die Visualisierung der TTC in der Form als Rundinstrument dargestellt. Der "Unendlich-Punkt" (Soll-Punkt) befindet sich oben auf der Skala.

Bei einer Folgefahrt in konstantem Abstand ist $T_{TC} = \infty$. Dieser Idealpunkt ist sowohl von einem automatischen Abstandsregler (ACC) also auch von einem menschlichen Fahrer anzustreben. Er ist in Fig. 8 mit "O.K." und einem Stern gekennzeichnet und stellt den Sollzustand dar. Im unteren dunkel hinterlegten Bereich ist die $T_{TC}$ positiv, d. h. die Kollision steht bevor. Im ganz unten dargestellten tiefdunklen Bereich (etwa 2s bis $\infty$) ist dringend ein Bremseingriff erforderlich. Die schwarzweißen Ringe (bei etwa $T_{TC} = 0.8$ s) kennzeichnen den aktuellen Ist-Zustand und die verschwimmenden Ringe dahinter eine Kurzzeit-Historie. Im grün bis blau hinterlegten Bereich ist die $T_{TC} < 0$, was bedeutet, dass sich der Abstand zum Vorderfahrzeug gerade vergrößert.

Der Bereich zwischen $T_{TC} = - 3$ s und $T_{TC} = +3$ s ist hier absichtlich nichtlinear komprimiert, da Regeleingriffe in diesem Bereich meist noch nicht notwendig sind. Im Gegenteil ist es aus Gründen der Energieökonomie und des Fahrkomforts im Allgemeinen sinnvoller, den Änderungen des Vorderfahrzeugs nicht unmittelbar zu folgen, sondern bis zum nächsten Eingriff den Längsabstand leicht variieren zur lassen. Der $T_{TC}$-Bereich, in dem noch nicht eingegriffen wird, sollte sich mit der Eigengeschwindigkeit ändern.

Die Punkte - 0 s und +0 s sind im Übrigen identisch, die eigentlich zyklische Skala kann also auch als solche dargestellt werden (oder aber an einer anderen Stelle aufgeschnitten werden).

In Fig. 9 wird diesem Umstand durch Darstellung der $T_{TC}$ auf einem Rundinstrument Rechnung getragen. Die Farben kennzeichnen hier drei Sektoren: blau steht für "freie Fahrt!", rot steht für "Bremsen!" und grün für korrekte Folgefahrt.

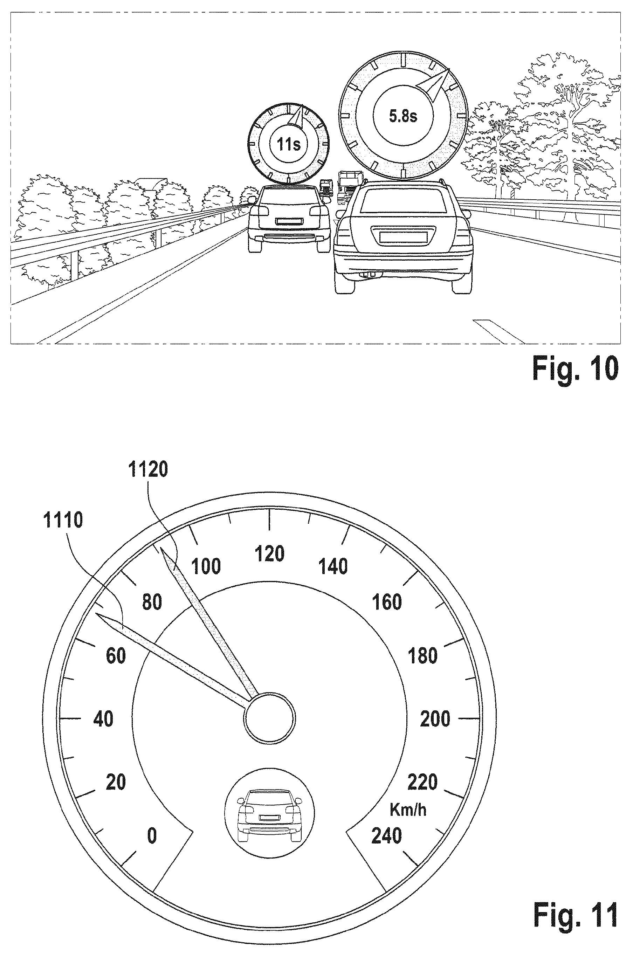

Fig. 10 zeigt eine Ausführung, bei der ein oder mehrere $T_{TC}$-Tachometer in das Kamerabild eingeblendet werden können, das dem Fahrer angezeigt wird. Hier bewegt sich der $T_{TC}$-Tachometer wie starr verbunden mit dem jeweiligen Objekt und skaliert sich abhängig von dessen Größe im Bild.

Beeinflussung während der Verfolgung

Es ist von Vorteil, dem Fahrer Möglichkeiten zur Beeinflussung während der Objektverfolgung zu geben. Zumindest sollte er die Möglichkeit haben, den longitudinalen Abstand nach seinen Wünschen zu beeinflussen. Dazu ist eine Eingabemöglichkeit vorgesehen, mit den Kommandos der Art

- "Abstand verringern" und
- "Abstand vergrößern"

gegeben werden können, gegebenenfalls auch mit einer Beeinflussung des Grads der Änderung.

Hierfür können die oben beschriebenen Interaktionsmöglichkeiten genutzt werden.

Weiterhin ist es sinnvoll, dem Fahrer eine Einflussmöglichkeit auf den Grad des oben beschriebenen Verhaltens bezüglich Energieeffizienz und Fahrkomfort versus Energieeinsatz und "Spritzigkeit/Sportlichkeit" zu geben.

Adaption an Fahrerwunsch

Sofern der Fahrer eine Einflussmöglichkeit auf das Systemverhalten hat und diese nutzt, hat das System die Gelegenheit, Vorlieben des Fahrers (langfristiger und kurzfristiger Art) zu erlernen. Vorteilhafterweise kann es sich darauf einstellen und die geänderten Parameter für künftige Regelvorgänge nutzen.

Halbautomatisches ACC-System (Driver in the Loop)

Eine mögliche Ausgestaltungsform ist die halbautomatische Regelung, bei der der Fahrer in die Regelschleife eingebunden wird. Hierbei bedient der Fahrer weiterhin Gas und Bremse und - sofern vorhanden - auch die Gangschaltung. Die Vorgaben zu deren Betätigung werden vom System an den Fahrer übermittelt. Dies kann durch eine Visualisierung wie in Fig. 8, Fig. 9, Fig. 10 oder ähnlich erfolgen.

Noch vorteilhafter ist jedoch eine akustische oder haptische Übermittlung. Dabei werden z. B. akustische Signale ausgegeben, aus deren Klang und Intensität der Fahrer rückschließt, ob und in welchem Grad verzögert oder beschleunigt werden soll. Um unnötigen Stress zu vermeiden, sollte zumindest die Aufforderung für die Beschleunigung z. B. nach einer gewissen Zeit selbstständig enden, auch wenn der Fahrer der Aufforderung nicht folgt.

Ein solches halbautomatisches System besitzt den Vorteil, dass es ohne Eingriffe in das Fahrzeug (Elektronik, Mechanik) nachgerüstet werden kann. Es ist daher auch in einem mobilen Gerät denkbar, das - so wie heute eine mobile Navigation oder eine Handy-Navigation - an der Windschutzscheibe oder am Armaturenbrett montiert wird. Es ist lediglich dafür zu sorgen, dass die Kamera möglichst ungehinderten Blick nach vorne hat.

Gleichzeitige Berücksichtigung mehrerer Objekte

Sofern das System in der Lage ist, mehrere Objekte gleichzeitig zu verfolgen, so kann es vorteilhaft sein, diese auch gleichzeitig bei der Abstandsregelung zu berücksichtigen. Dies ist beispielsweise sinnvoll, wenn sich erstes Zielobjekt und das Egofahrzeug auf dem rechten Autobahnstreifen befinden, während das Zielobjekt ein weiteres Objekt rechts überholt. In diesem Falle ist es sinnvoll, zumindest zeitweise beide Zielobjekte weiter zu verfolgen und das zweite Zielobjekt nicht ebenfalls rechts zu überholen, um eine Gefahrensituation zu vermeiden und ggf. gesetzliche Vorschriften einzuhalten.

Anzeige des Objekts in einem Tachometer

Fig. 11 zeigt eine vorteilhafte Ausgestaltung für einen Teil der Anzeige in der Instrumententafel. Hier ist der Tachometer gezeigt, der neben dem Zeiger 1110 für die Geschwindigkeit des Ego-Fahrzeugs (hell) noch einen zweiten Zeiger 1120 (dunkel) aufweist. Das verfolgte Objekt wird dabei in den Tachometer eingeblendet. Sofern ein Objekt verfolgt wird, zeigt der dunkle Zeiger 1120 dessen Geschwindigkeit an, die mittels $v_{Obj} = v_{Ego} - V_{Diff}$ ermittelt werden kann, wobei $V_{Diff}$ die sensoriell bestimmbare Differenzgeschwindigkeit ist.

Als Besonderheit wird in Fig. 11 zusätzlich das Abbild des verfolgten Objekts eingeblendet. Dies kann innerhalb des Tachometer-Instruments oder auch außerhalb an geeigneter Stelle erfolgen. Das Abbild des Objekts wird durch Ausschneiden aus dem Kamerabild gewonnen. Durch die videobasierte Objektverfolgung liegen stets alle benötigten Informationen vor (Objektposition und -größe im Bild), um das Ausschneiden korrekt vorzunehmen.

Die Update-Rate für das Abbild des verfolgten Objektes kann identisch zur Bildwiederholrate der Kamera (z. B. 25 Bilder pro Sekunde) gewählt werden oder auch davon verschieden. Eine wesentlich geringere Update- Rate (z. B. 1 Bild pro Sekunde) kann bereits genügen, da sich das Aussehen des Objekts i. allg. kaum verändert. Eine hohe Update-Rate hat dagegen der Vorteil, dass Lichtsignale (Brems-/Blinkleuchten) unmittelbar wiedergegeben werden.

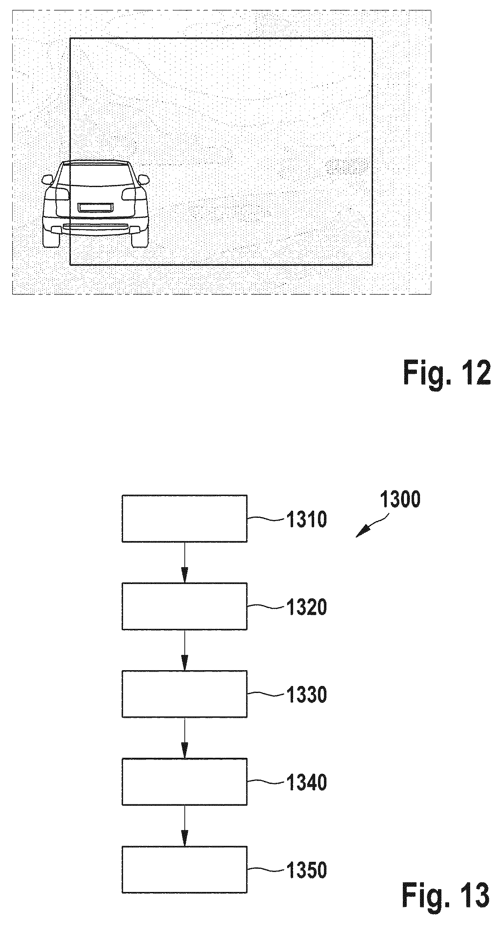

Vorteilhaft ist in diesem Zusammenhang auch die Verwendung der zeitlichen Filterung und/oder des virtuell erweiterten Kameraerfassungsbereichs (siehe auch Fig. 12).

Fig. 12 zeigt dabei eine Darstellung, wie aus einem Kamerabild ein verfolgtes Objekts extrahiert werden kann, wobei der Ansatz zum Extrahieren in dieser Beschreibung nicht weiter ausgeführt werden soll.

Eine zeitliche Filterung berücksichtigt die Daten der Objektverfolgung. Dadurch bildet sich das Objekt scharf heraus, während der (anders bewegte) Hintergrund unscharf "verschwimmt". Weiterhin kann das Objekt auch dann noch vollständig angezeigt werden, wenn es z. B. in engen Kurven oder wegen Verdeckung durch die eigene Motorhaube von der Kamera nur noch teilweise erfasst werden kann. Fig. 12 zeigt ein typisches Beispiel: Das Objekt "schält" sich automatisch aus dem unscharfen Hintergrund heraus und der virtuelle Erfassungsbereich (Gesamtbild) ist größer als der Erfassungsbereich der Kamera (rechteckiger weißer innerer Rahmen).

Phase Abbruch der Objektverfolgung

Die Verfolgung eines bestimmten Objekts muss irgendwann abgebrochen werden, weil das Objekt

- schneller gefahren ist und sich entfernt hat,
- sich auf einen anderen Fahrstreifen bewegt hat, abbiegt,
- sich seitlich aus dem Bild heraus bewegt (enge Kurve),
- überholt wird und von der Kamera nicht mehr erfasst wird,

- von einem anderen Objekt (z. B. Einscherer) oder Hindernis verdeckt wird.

In einer vorteilhaften Ausgestaltung berücksichtigt das System Navigationsinformationen und erkennt als Abbruchkriterium, dass das Objekt eine andere als die eigene vorgesehene Route wählt.

Weiterhin liegt beispielsweise ein Abbruchkriterium vor, wenn die Verfolgung des Objekts mit sich bringen würde, dass das Ego- Fahrzeug den gewünschten bzw. gesetzlich vorgesehenen Geschwindigkeitsbereich verlassen müsste. Durch Übersteuern von Gas, Bremse oder ggf. Lenkung kann der Fahrer selbstverständlich ebenfalls einen Abbruch der Objektverfolgung herbeiführen.

Sobald ein Abbruchkriterium erfüllt ist oder sogar bereits wenn der bevorstehende Abbruch absehbar wird, sollte der Fahrer wieder optisch, akustisch oder/und haptisch informiert werden, analog zum Beginn der Objektverfolgung. Nachfolgend kehrt das System wieder zurück in den Zustand, in dem eine Benutzerinteraktion erforderlich ist, um das nächste Zielobjekt auszuwählen.

Alternativ kann das System auch vollautomatisch das geeignetste Objekt zur weiteren Verfolgung auswählen. Der Grad dieser Eignung kann z. B. davon abhängen, auf welchem Fahrstreifen sich das Objekt befindet und mit welcher (Relativ-) Geschwindigkeit es sich bewegt.

Fig. 13 zeigt ein Ablaufdiagramm eines Ausführungsbeispiels der vorliegenden Erfindung als Verfahren 1300 zur Unterstützung eines Fahrers bei einer Spurführung eines Fahrzeugs auf einer Fahrbahn. Das Verfahren 1300 umfasst einen Schritt des Anzeigens 1310 eines eingelesenen Bildes auf einer Anzeigeeinheit an den Fahrer, wobei das Bild von einer Kamera aufgenommen wurde und eine Fahrzeugumgebung repräsentiert. Ferner umfasst das Verfahren 1300 einen Schritt des Einlesens 1320 eines von dem Fahrer an einer Bedienungsschnittstelle eingegebenen Bedienungssignals und einen Schritt des Auswählens 1330 eines in dem Bild enthaltenen Objektes unter Verwendung des Bedienungssignals. Weiterhin umfasst das Verfahren 1300 einen Schritt des Anzeigens 1340 einer Markierung auf der Anzeigeeinheit, wobei die Markierung in einem Bereich des Bilds angezeigt wird, der das Objekt repräsentiert. Schließlich umfasst das Verfahren einen Schritt des Verwendens 1350 des Objektes zur Bestimmung von zumindest einem Längsregelungsparameter für einen von dem Fahrzeug zu befahrenden Fahrweg, um den Fahrer bei der Spurführung des Fahrzeugs auf der Fahrbahn zu unterstützen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

**Patentansprüche**

1. Verfahren (1300) zur Unterstützung eines Fahrers bei einer Spurführung eines Fahrzeugs (100) auf einer Fahrbahn (145), wobei das Verfahren die folgenden Schritte aufweist:

   - Anzeigen (1310) eines eingelesenen Bildes (135) auf einer Anzeigeeinheit (150) an den Fahrer (140), wobei das Bild (135) von einer Kamera (120) aufgenommen wurden und eine Fahrzeugumgebung (115) repräsentiert;
   - Einlesen (1320) eines von dem Fahrer (140) an einer Bedienungsschnittstelle (210) eingegebenen Bedienungssignals (215);
   - Auswählen (1330) eines in dem Bild (135) enthaltenen Objektes (300) unter Verwendung des Bedienungssignals (215);
   - Anzeigen (1340) einer Markierung (310, 500, 600) auf der Anzeigeeinheit (150), wobei die Markierung (310, 500, 600) in einem Bereich des Bilds (135) angezeigt wird, der das Objekt (300) repräsentiert; und
   - Verwenden (1350) des Objektes (300) zur Bestimmung von zumindest einem Längsregelungsparameter für einen von dem Fahrzeug (100) zu befahrenden Fahrweg, um den Fahrer (140) bei der Spurführung des Fahrzeugs (100) auf der Fahrbahn (145) zu unterstützen, **dadurch gekennzeichnet, dass** im Schritt des Anzeigens (1340) ferner eine Information (600) bezüglich eines Parameters in Bezug auf eine Zeit bis zu einer Kollision mit dem Objekt zusammen mit der Markierung (310, 500, 600) auf der Anzeigeeinheit angezeigt wird, wobei die Information (600) in einem Bereich des Bildes angezeigt wird, der das Objekt (300) repräsentiert.

2. Verfahren (1300) gemäß Anspruch 1, **dadurch gekennzeichnet, dass** im Schritt des Anzeigens (1310) des Bildes (135) eine Voraberkennung von Objekten (300) in dem Bild (135) erfolgt, wobei im Schritt des Auswählens (1330) unter Verwendung des Bedienungssignals (215) eines von mehreren voraberkannten Objekten (300) ausgewählt wird.

3. Verfahren (1300) gemäß Anspruch 2, **dadurch gekennzeichnet, dass** im Schritt des Anzeigens (1310) das Bild (135) auf einem berührungsempfindlichen Display der Anzeigeeinheit (150) angezeigt wird und wobei im Schritt des Einlesens (1320) das Bedienungssignal (215) ansprechend auf einen erkannten Druck auf das berührungsempfindliche Display generiert wird.

4. Verfahren gemäß Anspruch 2, **dadurch gekennzeichnet, dass** im Schritt des Einlesens (1320) das Bedienungssignal (215) ansprechend auf eine erkannte Geste des Fahrers, insbesondere ein Zeigen des Fahrers mit dem Finger auf eine Position generiert wird.

5. Verfahren (1300) gemäß Anspruch 3 oder 4, **dadurch gekennzeichnet, dass** im Schritt des Auswählens (1330) dasjenige in dem Bild (135) voraberkannte Objekt ausgewählt wird, das am Nähesten zu einer Position in dem Bild (135) liegt; die durch einen erkannten Druck auf das berührungsempfindliche Display repräsentiert ist.

6. Verfahren (1300) gemäß einem der vorangegangenen Ansprüche, **dadurch gekennzeichnet, dass** im Schritt des Einlesens (1320) eine Bedienungsschnittstelle (210) verwendet wird, die das Bedienungssignal (215) durch eine Auswertung eines Sprachbefehls des Fahrers (140) des Fahrzeugs (100) erzeugt.

7. Verfahren (1300) gemäß einem der vorangegangenen Ansprüche, **dadurch gekennzeichnet, dass** im Schritt des Auswählens (1330) des Objektes (300) ein Objekt ausgewählt wird, das ein anderes Fahrzeug repräsentiert, das sich auf der Fahrbahn (145) vor oder neben dem Fahrzeug (115) befindet.

8. Verfahren (1300) gemäß einem der vorangegangenen Ansprüche, **dadurch gekennzeichnet, dass** im Schritt des Anzeigens (1340) die Markierung (300, 500, 600) mit zeitlich variierender Darstellung angezeigt wird.

9. Verfahren (1300) gemäß einem der vorangegangenen Ansprüche, **dadurch gekennzeichnet, dass** im Schritt des Verwendens (1350) ferner ein Vergleich des Fahrweges des Objektes (300) mit einer gewünschten Fahrstrecke des Fahrzeugs (100) erfolgt, wobei das Objekt (300) nicht mehr zur Bestimmung des von dem Fahrzeug (100) zu befahrenden Fahrweges verwendet wird, wenn der Vergleich ergeben hat, dass das Objekt (300) sich mehr als eine vorbestimmten Distanz von der gewünschten Fahrstrecke weg entfernt hat und/oder
dass im Schritt des Verwendens (1350) das Objekt (300) nicht mehr zur Bestimmung des von dem Fahrzeug (100) zu befahrenden Fahrweges verwendet wird, wenn eine ermittelte Geschwindigkeit des Objektes (300) größer als eine an der Position des Fahrzeugs (100) zulässige Geschwindigkeit ist und/oder dass im Schritt des Verwendens (1350) das Objekt (300) nicht mehr zur Bestimmung von zumindest einem Längsregelungsparameter für den vom dem Fahrzeug (100) zu befahrenden Fahrweg verwendet wird, wenn ein ermittelter Abstand des Objektes (300) zu dem Fahrzeug (100) größer als ein vorbestimmter Abstand ist.

10. Vorrichtung (110), insbesondere Navigationsvorrichtung, die Einheiten (150, 210, 160) aufweist, die ausgebildet sind, um die Schritte eines Verfahrens (1300) gemäß einem der Ansprüche 1 bis 9 durchzuführen.

11. Computer-Programmprodukt mit Programmcode zur Durchführung des Verfahrens (1300) nach einem der Ansprüche 1 bis 9, wenn das Programm auf einer Vorrichtung (110) ausgeführt wird.

**Claims**

1. Method (1300) for assisting a driver in performing lateral guidance of a vehicle (100) on a carriageway (145), wherein the method has the following steps:

- displaying (1310) a read-in image (135) on a display unit (150) to the driver (140), wherein the image (135) has been recorded by a camera (120) and represents surroundings (115) of the vehicle;
- reading in (1320) an operator control signal (215) which has been input at an operator control interface (210) by the driver (140);
- selecting (1330) an object (300), contained in the image (135), using the operator control signal (215);
- displaying (1340) a mark (310, 500, 600) on the display unit (150), wherein the mark (310, 500, 600) is displayed in a region of the image (135) which represents the object (300); and
- using (1350) the object (300) to determine at least one longitudinal control parameter for a route to be travelled on by the vehicle (100), in order to assist the driver (140) in performing lateral guidance of the vehicle (100) on the carriageway (145),

**characterized in that**

in the display step (1340) information (600) relating to a parameter with respect to a time up to a collision with the object is also displayed, together with the mark (310, 500, 600) on the display unit, wherein the information (600) is displayed in a region of the image which represents the object (300).

2. Method (1300) according to Claim 1, **characterized in that** in the step (1310) for displaying the image (135), pre-recognition of objects (300) takes place in the image (135), wherein in the selection step (1330) using the operator control signal (215) one of a plurality of pre-recognised objects (300) is selected.

3. Method (1300) according to Claim 2, **characterized in that** in the display step (1310) the image (135) is displayed on a touch-sensitive display of the display unit (150), and wherein in the reading-in step (1320) the operator control signal (215) is generated in response to a detected pressure on the touch-sensitive display.

4. Method according to Claim 2, **characterized in that** in the reading-in step (1320) the operator control signal (215) is generated in response to a recognised gesture of the driver, in particular pointing of the driver with his finger to a position.

5. Method (1300) according to Claim 3 or 4, **characterized in that** in the selection step (1330) that object which is pre-recognized in the image (135) and is closest to a position in the image (135) which is represented by a detected pressure on the touch-sensitive display is selected.

6. Method (1300) according to one of the preceding claims, **characterized in that** in the reading-in step (1320) an operator control interface (210) which generates the operator control signal (215) by evaluating a voice command of the driver (140) of the vehicle (100) is used.

7. Method (1300) according to one of the preceding claims, **characterized in that** in the step (1330) of selecting the object (300) an object is selected which represents a different vehicle which is located on the carriageway (145) in front of or next to the vehicle (115).

8. Method (1300) according to one of the preceding claims, **characterized in that** in the display step (1340) the mark (300, 500, 600) is displayed with a chronologically varying representation.

9. Method (1300) according to one of the preceding claims, **characterized in that** in the use step (1350) a comparison of the route of the object (300) with a desired route section of the vehicle (100) also takes place, wherein the object (300) is no longer used to determine the route to be travelled on by the vehicle (100) if the comparison has revealed that the object (300) has moved away from the desired route section by more than a predetermined distance, and/or **in that** in the use step (1350) the object (300) is no longer used to determine the route to be travelled on by the vehicle (100) if a determined speed of the object (300) is higher than a speed which is permissible at the position of the vehicle (100), and/or **in that** in the use step (1350) the object (300) is no longer used to determine at least one longitudinal control parameter for the route to be travelled on by the vehicle (100) if a determined distance of the object (300) from the vehicle (100) is greater than a predetermined distance.

10. Device (110), in particular a navigation device, which has units (150, 210, 160) which are designed to carry out the steps of a method (1300) according to one of Claims 1 to 9.

11. Computer program product with program code for carrying out the method (1300) according to one of Claims 1 to 9 when the program is executed on a device (110).

**Revendications**

1. Procédé (1300) pour assister un conducteur lors d'un guidage d'un véhicule (100) sur une voie de circulation (145), dans lequel le procédé comprend les étapes consistant à :

    - afficher (1310) une image (135) lue en entrée sur une unité d'affichage (150) au conducteur (140), dans lequel l'image (135) a été enregistrée par une caméra (120) et représente un environnement (115) du véhicule ;
    - lire en entrée (1320) un signal de commande (215) fourni en entrée par le conducteur (140) sur une interface de commande (210) ;
    - sélectionner (1330) un objet (300) contenu dans l'image (135) en utilisant le signal de commande (215) ;
    - afficher (1340) un marquage (310, 500, 600) sur l'unité d'affichage (150), dans lequel le marquage (310, 500, 600) est affiché dans une zone de l'image (135) qui représente l'objet (300) ; et
    - utiliser (1350) l'objet (300) pour déterminer au moins un paramètre de réglage longitudinal pour un trajet à parcourir par le véhicule (100) afin d'assister le conducteur (140) lors du guidage du véhicule (100) sur la voie de circulation (145), **caractérisé en ce que**, lors de l'étape d'affichage (1340), une information (600) concernant un paramètre se rapportant à un temps s'écoulant jusqu'à une collision avec un objet est en outre affichée en association avec le marquage (310, 500, 600) sur l'unité d'affichage, dans lequel l'information (600) est affichée dans une zone de l'image qui représente l'objet.(300).

2. Procédé (1300) selon la revendication 1, **caractérisé en ce que**, lors de l'étape d'affichage (1310) de l'image (135), une identification préalable d'objets (300) est effectuée dans l'image (135), dans lequel, lors de l'étape de sélection (1330), l'un d'une pluralité d'objets (300) préalablement identifiés est sélectionné en utilisant le signal de commande (215).

3. Procédé (1300) selon la revendication 2, **caractérisé en ce que**, lors de l'étape d'affichage (1310), l'image (135) est affichée sur un afficheur tactile de l'unité d'affichage (150) et dans lequel, lors de l'étape de lecture en entrée (1320), le signal de commande (215) est généré d'une manière qui correspond à une pression détectée sur l'afficheur tactile.

4. Procédé selon la revendication 2, **caractérisé en ce que**, lors de l'étape de lecture en entrée (1320), le signal de commande (215) est généré d'une manière qui correspond à un geste détecté du conducteur, notamment le fait que le conducteur pointe du doigt vers une position.

5. Procédé (1300) selon la revendication 3 ou 4, **caractérisé en ce que**, lors de l'étape de sélection (1330), on sélectionne dans l'image (135) un objet préalablement identifié qui se situe le plus près d'une position dans l'image qui est représentée par une pression détectée sur l'afficheur tactile.

6. Procédé (1300) selon l'une quelconque des revendications précédentes, **caractérisé en ce que**, lors de l'étape de lecture en entrée (1320), on utilise une interface de commande (210) qui génère le signal de commande (215) par évaluation d'une commande vocale du conducteur (140) du véhicule (100).

7. Procédé (1300) selon l'une quelconque des revendications précédentes, **caractérisé en ce que**, lors de l'étape de sélection (1330) de l'objet (300), on sélectionne un objet qui représente un autre véhicule se trouvant sur la voie de circulation (145) à l'avant ou à l'arrière du véhicule (115).

8. Procédé (1300) selon l'une quelconque des revendications précédentes, **caractérisé en ce que**, lors de l'étape d'affichage (1340), on affiche le marquage (300, 500, 600) avec une représentation variant dans le temps.

9. Procédé (1300) selon l'une quelconque des revendications précédentes, **caractérisé en ce que**, lors de l'étape d'utilisation (1350), on effectue une comparaison du trajet parcouru de l'objet (300) avec une étendue parcourue souhaitée du véhicule (100), dans lequel l'objet (300) n'est plus utilisé pour déterminer le trajet à parcourir par le véhicule (100) lorsque la comparaison a indiqué que l'objet (300) s'est éloigné de plus d'une distance prédéterminée de l'étendue parcourue souhaitée et/ou
**en ce que**, lors de l'étape d'utilisation (1350), l'objet (300) n'est plus utilisé pour déterminer le trajet à parcourir par le véhicule (100) lorsqu'une vitesse déterminée de l'objet (300) est supérieure à une vitesse admissible à la position du véhicule (100), et/ou
**en ce que**, lors de l'étape d'utilisation (1350), l'objet (300) n'est plus utilisé pour déterminer au moins un paramètre de réglage longitudinal pour le trajet à parcourir par le véhicule (100) lorsqu'une distance déterminée de l'objet (300) au véhicule (100) est supérieure à une distance prédéterminée.

10. Dispositif (110), et plus particulièrement, dispositif de navigation, comportant des unités (150, 210, 160) conçues pour mettre en oeuvre les étapes d'un procédé (1300) selon l'une quelconque des revendications 1 à 9.

11. Produit de programme informatique comprenant un code de programme destiné à mettre en oeuvre le procédé (1300) selon l'une quelconque des revendications 1 à 9 lorsque le programme est exécuté sur un dispositif (110).

130

120   155

110
160

127   100

145

135

140

150

125

**Fig. 1**

135

230

110

215   220

160

150   210

**Fig. 2**

Fig. 3

-0 s

-1 s

-2 s

-3 s
-4 s
O.K.
4 s
3 s

2 s

1 s

0 s

310

135

Fig. 4

Fig. 5

Fig. 6

135

500

600

Fig. 7A

135

500

600

Fig. 7B

Fig. 8

Fig. 9

Fig. 10

Fig. 11

Fig. 12

1310

1300

1320

1330

1340

1350

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008003666 A1

- JP 2002046501 A